# EUROPEAN PATENT APPLICATION

(11) **EP 4 254 564 A1**
(43) Date of publication of application: **04.10.2023**
(21) Application number: 21897757.7
(22) Date of filing: 12.11.2021
(51) Int. Cl.: H01M 4/62, H01B 1/06, H01B 1/10, H01M 10/052, H01M 10/0562

(54) **SULFIDE INORGANIC SOLID ELECTROLYTE MATERIAL, SOLID ELECTROLYTE, SOLID ELECTROLYTE FILM, AND LITHIUM ION BATTERY**

(30) Priority: 30.11.2020 JP 2020197943
(71) Applicant: Furukawa Co., Ltd., Chiyoda-ku Tokyo 100-8370 (JP)
(72) Inventor: YOSHIDA, Tatsushi, Tsukuba-shi, Ibaraki 305-0856 (JP)
(74) Representative: Müller, Christian Stefan Gerd
(86) International application number: PCT/JP2021/041740
(87) International publication number: WO 2022/113783

(57) **Abstract**

Provided is a sulfide-based inorganic solid electrolyte material including Li, P, and S as constituent elements, in which in a spectrum obtained by ³¹P-NMR measurement, when a total area of peaks derived from a PS₄ structure is represented by 1, a total area of peaks derived from a P₂S₆ glass structure is 0.1 or more.

## Description

### TECHNICAL FIELD

The present invention relates to a sulfide-based inorganic solid electrolyte material, a solid electrolyte, a solid electrolyte membrane, and a lithium ion battery.

### BACKGROUND ART

In general, a lithium ion battery is used as a power supply of a small mobile device such as a mobile phone or a laptop. In addition, recently, the lithium ion battery has been used not only as a power supply of a small mobile device but also as a power supply of an electric vehicle, an electric power storage, or the like.

In a currently commercially available lithium ion battery, an electrolytic solution including a combustible organic solvent is used.

On the other hand, an investigation on a lithium ion battery (hereinafter, also referred to as "all-solid-state lithium ion battery") in which the electrolytic solution is replaced with a solid electrolyte such that the entire battery is made of a solid has progressed. The all-solid-state lithium ion battery does not include a combustible organic solvent. Therefore, it is considered that a safety device can be simplified and manufacturing costs or productivity is excellent.

As a solid electrolyte material used for the solid electrolyte, for example, a sulfide-based inorganic solid electrolyte material is known.

As a specific technique of the solid electrolyte material in the related art, an inorganic solid electrolyte material that focuses on a spectrum obtained by ³¹P-NMR measurement as in Patent Documents 1 and 2 is known.

Patent Document 1 describes a solid electrolyte that satisfies all of the following requirements.
- The solid electrolyte includes lithium, phosphorus, and sulfur as components.

·The following Formula (A) is satisfied.

   LiₐP_{c}S_{d}Xₑ ... (A)

   [In Formula (A), a to e represent composition ratios of the respective elements, a:c:d:e represents 1 to 9:1:3 to 7:0 to 9, and X represents I.]
·In the ³¹P-NMR, a peak (first peak) is present in a region of 83.0 ppm or more and 88.0 ppm or less, and a peak is not present in a region other than the region of 83.0 ppm or more and 88.0 ppm or less or, even if present, an intensity ratio of the peak with respect to the first peak is 0.5 or less.
·The ionic conductivity 5×10⁻⁴ S/cm or higher.
·When a 100 ml container is filled with 0.1 g of the solid electrolyte and air having a humidity of 80 to 90% passes through the container at 500 ml/min for 60 minutes, the average value of hydrogen sulfide concentration in the air is 200 ppm or less.

Patent Document 2 describes a sulfide solid electrolyte material including phosphorus and sulfur. In a spectrum obtained by measuring the sulfide solid electrolyte material by ³¹P-NMR, when a peak appearing in a range of 87.5 ppm or more and 88.5 ppm or less is defined as a first peak, a peak appearing in a range of 84.2 ppm or more and 85.2 ppm or less in the same spectrum is defined as a second peak, and a ratio between an integrated intensity of the first peak and an integrated intensity of the second peak is represented by x:1-x, 0.00926 ≤ x ≤ 0.37 is satisfied.

### RELATED DOCUMENT

### PATENT DOCUMENT

[Patent Document 1] Japanese Patent No. 6077740
[Patent Document 2] Japanese Unexamined Patent Publication No. 2019-3927

### SUMMARY OF THE INVENTION

### TECHNICAL PROBLEM

One performance required for the solid electrolyte material is high ionic conductivity.

According to findings of the present inventors, regarding the sulfide-based inorganic solid electrolyte particles in the related art, there is room for improvement of ionic conductivity.

The present invention has been made under these circumstances. One object of the present invention is to provide sulfide-based inorganic solid electrolyte particles having a high ionic conductivity.

### SOLUTION TO PROBLEM

The present inventors completed the present invention provided below and achieved the above-described object.

According to the present invention,
there is provided a sulfide-based inorganic solid electrolyte material including Li, P, and S as constituent elements,
in which in a spectrum obtained by ³¹P-NMR measurement, when a total area of peaks derived from a PS₄ structure is represented by 1, a total area of peaks derived from a P₂S₆ glass structure is 0.1 or more.

In addition, according to the present invention,
there is provided a solid electrolyte including the above-described sulfide-based inorganic solid electrolyte material.

In addition, according to the present invention,
there is provided a solid electrolyte membrane including the above-described solid electrolyte as a main component.

In addition, according to the present invention,
there is provided a lithium ion battery including:
a positive electrode including a positive electrode active material layer;
an electrolyte layer; and
a negative electrode including a negative electrode active material layer,
in which at least one of the positive electrode active material layer, the electrolyte layer, and the negative electrode active material layer includes the above-described sulfide-based inorganic solid electrolyte material.

### ADVANTAGEOUS EFFECTS OF INVENTION

According to the present invention, a sulfide-based inorganic solid electrolyte particle having a high ionic conductivity is provided.

### BRIEF DESCRIPTION OF THE DRAWINGS

Fig. 1 is a cross-sectional view showing an example of a structure of a lithium ion battery.
Fig. 2 is a ³¹P-NMR spectrum of a sulfide-based inorganic solid electrolyte material according to Example 1.

### DESCRIPTION OF EMBODIMENTS

Hereinafter, embodiments of the present invention will be described in detail with reference to the drawings.

The drawings are merely illustrative. The shapes, a dimensional ratio, and the like of each of members in the drawings do not necessarily correspond to those of an actual article.

In the present specification, the expression "X to Y" in the description of a numerical range represents X or more and Y or less unless specified otherwise. For example, "1 to 5 mass%" represents "1 mass% or more and 5 mass% or less".

In the present specification, the expression "group (atomic group)" encloses both a group not having a substituent and a group having a substituent unless specified that the group is substituted or unsubstituted. For example, "alkyl group" encloses not only an alkyl group not having a substituent (unsubstituted alkyl group) but also an alkyl group having a substituent (substituted alkyl group).

The expression "(meth)acryl" in the present specification represents a concept including acryl and methacryl. The same shall be applied to similar expressions such as "(meth)acrylate".

### <Sulfide-Based Inorganic Solid Electrolyte Material>

The sulfide-based inorganic solid electrolyte material according to a present embodiment includes Li, P, and S as constituent elements.

In the sulfide-based inorganic solid electrolyte material according to the present embodiment, in a spectrum obtained by ³¹P-NMR measurement, when a total area of peaks derived from a PS₄ structure is represented by 1, a total area of peaks derived from a P₂S₆ glass structure is 0.1 or more.

The present inventors investigated improvement of the ionic conductivity of the sulfide-based inorganic solid electrolyte material from various viewpoints. As a result, the present inventors found that, in the spectrum obtained by ³¹P-NMR measurement, the area of peaks derived from the P₂S₆ glass structure correlates with the ionic conductivity.

Based on this finding, the present inventors conducted a further investigation. It was found that, when the area of peaks derived from the P₂S₆ glass structure is large to some extent with respect to the total area of peaks derived from the PS₄ structure, the ionic conductivity is improved.

Therefore, by devising the raw material composition or the manufacturing method, the present inventors newly prepared a sulfide-based inorganic solid electrolyte material, in which "in a spectrum obtained by ³¹P-NMR measurement, when a total area of peaks derived from a PS₄ structure is represented by 1, a total area of peaks derived from a P₂S₆ glass structure is 0.1 or more." As a result, the ionic conductivity was able to be improved ("PS₄ structure" represents both of the PS₄ crystal structure and the PS₄ glass structure).

The reason why the sulfide-based inorganic solid electrolyte material according to the present embodiment exhibits excellent ionic conductivity can be described as follows. Just to be sure, the following description includes presumptions, and the present invention is not limited to the following description.

Theoretically, the ionic conductivity of a crystal structure is higher than the ionic conductivity of a glass structure. Therefore, it is considered that, when all of the structures in the sulfide-based inorganic solid electrolyte material are crystal structures, the ionic conductivity is improved. However, in an actually present system, the movement of Li ions is suppressed due to lattice mismatch at an interface between a crystal structure and a crystal structure.

A decrease in ionic conductivity caused by the "lattice mismatch" is suppressed. Therefore, it is presumed that the filling of "gaps" between the crystal structures with a glass structure is effective. In the present embodiment, the configuration "a total area of peaks derived from a P₂S₆ glass structure is 0.1 or more" represents that a sufficient amount of the P₂S₆ glass for improving the mobility of Li ions is present between the crystal structures.

Additionally, "the area of peaks derived from the PS₄ structure", "the area of peaks derived from the P₂S₆ glass structure", or the like can be obtained by "waveform separation" using a Gaussian function of the NMR spectrum obtained by ³¹P-NMR measurement. The waveform separation can be performed, for example, using a commercially available software capable of fitting curves of various spectral data. Examples of the software capable of fitting curves include software built in an NMR device and software that is commercially available separately from an NMR device. As the former software, ALICE2 manufactured by JOEL Ltd. can be used. In addition, as the latter software, software such as OriginPro or IgorPro is famous.

Patent Document 1 does not describe the analysis by the waveform separation of the ³¹P-NMR spectrum. In addition, Patent Document 2 does not describe the area of peaks derived from the P₂S₆ glass structure in the ³¹P-NMR spectrum at all. The idea of investigating the ³¹P-NMR spectrum "in detail" by the waveform separation and focusing on the area of peaks derived from the P₂S₆ glass structure with respect to the area of peaks derived from PS₄ structure is a unique idea of the present inventors.

In addition, in the present embodiment, a value (unit: ppm) of the following table can be adopted as a chemical shift of each of chemical species. That is, when the waveform separation is performed on the obtained NMR spectrum to separate the NMR spectrum into a peak corresponding to each of the chemical species, it is preferable to use a Gaussian function representing a maximum value in a numerical range shown in the following table.

### [Table 1]

**Table 1**

| Chemical Species | PS₄ Glass | PS₄ Crystal | P₂S₇ Glass | P₂S₇ Crystal | P₂S₆ Glass | P₂S₆ Crystal |
|---|---|---|---|---|---|---|
| Chemical Shift | 83.0 to 85.5 | 86.1 to 88.0 | 90.8 to 92.0 | 88.5 to 90.7 | 105.0 to 107.0 | 103.0 to 104.9 |

The sulfide-based inorganic solid electrolyte material according to the present embodiment can be obtained by performing an appropriate manufacturing method using appropriate raw materials. Preferable materials or a preferable manufacturing method will be described below in detail, and examples thereof include: (i) using, as a raw material, P₂S₅ where the P content is more than 27.87 mass% that is defined by the stoichiometry; (ii) adjusting a molar ratio of each of the raw materials such that the composition of the final sulfide-based inorganic solid electrolyte material is the same as or similar to Li₁₀P₃S₁₂; and (iii) performing an appropriate annealing process. By paying attention to the above-described points, the sulfide-based inorganic solid electrolyte material according to the present embodiment is likely to be manufactured.

The description regarding the sulfide-based inorganic solid electrolyte material according to the present embodiment is continued.

### (Regarding NMR Spectrum)

As described above, in the ³¹P-NMR spectrum, When the total area of peaks derived from the PS₄ structure (both of a PS₄ crystal structure and a PS₄ glass structure) is represented by 1, the total area of peaks derived from the P₂S₆ glass structure is 0.1 or more. This value is preferably 0.15 or more and more preferably 0.25 or more. In addition, the upper limit of the value is, for example, 2.0 or less and preferably 1.0 or less. The value being appropriate is considered to represent that an appropriate amount of P₂S₆ glass is present in "gaps" between the crystal structures. That is, by appropriately adjusting the value, the ionic conductivity can be further improved.

In the ³¹P-NMR spectrum, when the total area of peaks derived from the PS₄ glass structure is represented by 1, the total area of peaks derived from the P₂S₆ glass structure is preferably 0.15 or more and more preferably 0.25 or more. In addition, the upper limit of the value is, for example, 3.0 or less and preferably 1.0 or less. The details are not clear but are presumed to be that, when the sulfide-based inorganic solid electrolyte material includes both of the P₂S₆ glass structure and the PS₄ glass structure as the glass structure and the ratio between the glass structures is appropriately adjusted, various types of lattice mismatch between the crystal structures can be filled with the glass structure. As a result, it is considered that the ionic conductivity may be further improved.

In the ³¹P-NMR spectrum, when the total area of peaks derived from the PS₄ glass structure is represented by 1, the total area of peaks derived from the PS₄ crystal structure is preferably 0.3 to 1 and more preferably 0.3 to 0.5.

As described above, it is considered that, when an appropriate amount of the glass structure is present between the crystal structures, the mobility of Li ions is improved. The value being 0.3 to 1 is presumed to represent that an appropriate amount of the glass structure is present between the crystal structures at the opening of the composition that is PS₄.

In the ³¹P-NMR spectrum, when the total area of peaks derived from the PS₄ structure is represented by 1, the total area of peaks derived from a P₂S₇ glass structure is typically 0.05 to 0.25 and preferably 0.05 to 0.2.

In the ³¹P-NMR spectrum, when the total area of peaks derived from the PS₄ structure is represented by 1, the total area of peaks derived from a P₂S₇ crystal structure is typically 0.05 to 0.25 and preferably 0.05 to 0.2.

In the ³¹P-NMR spectrum, when the total area of peaks derived from the PS₄ structure is represented by 1, the total area of peaks derived from a P₂S₆ crystal structure is typically 0.005 to 0.02 and preferably 0.01 to 0.1.

In the ³¹P-NMR spectrum, when the total area of peaks derived from the PS₄ glass structure is represented by 1, the total area of peaks derived from a P₂S₇ glass structure is typically 0.05 to 0.3 and preferably 0.08 to 0.25.

In the ³¹P-NMR spectrum, when the total area of peaks derived from the PS₄ glass structure is represented by 1, the total area of peaks derived from the P₂S₇ crystal structure is typically 0.05 to 0.3 and preferably 0.08 to 0.25.

In the ³¹P-NMR spectrum, when the total area of peaks derived from the PS₄ glass structure is represented by 1, the total area of peaks derived from the P₂S₆ crystal structure is typically 0.01 to 0.2, preferably 0.01 to 0.15, and more preferably 0.01 to 0.1.

By appropriately adjusting each of the areas of the peaks, the ionic conductivity may be further improved.

### (Constituent Element and Composition thereof)

The sulfide-based inorganic solid electrolyte material according to the present embodiment includes Li, P, and S as constituent elements from the viewpoint of electrochemical stability, stability in water or air, handling properties, and the like.

In addition, in the sulfide-based inorganic solid electrolyte material according to the present embodiment, from the viewpoint of further improving lithium ionic conductivity, electrochemical stability, stability in water or air, handling properties, and the like, a molar ratio Li/P of the content of Li to the content of P in the sulfide-based inorganic solid electrolyte material is preferably 1.0 or higher and 5.0 or lower, more preferably 2.0 or higher and 4.0 or lower, still more preferably 2.5 or higher and 3.8 or lower, still more preferably 2.8 or higher and 3.6 or lower, still more preferably 3.0 or higher and 3.5 or lower, still more preferably 3.1 or higher and 3.4 or lower, and still more preferably 3.2 or higher and 3.4 or lower.

In addition, a molar ratio S/P of the content of S to the content of P is preferably 2.0 or higher and 6.0 or lower, more preferably 3.0 or higher and 5.0 or lower, still more preferably 3.5 or higher and 4.5 or lower, still more preferably 3.8 or higher and 4.2 or lower, still more preferably 3.9 or higher and 4.1 or lower, and still more preferably 4.0.

The contents of Li, P, and S in the sulfide-based inorganic solid electrolyte material can be obtained by, for example, ICP Emission Spectroscopy or X-ray analysis.

The compositional formula of the sulfide-based inorganic solid electrolyte material according to the present embodiment is preferably Li₁₀P₃S₁₂. In other words, when the sulfide-based inorganic solid electrolyte material according to the present embodiment is manufactured, it is preferable to optimize a mixing ratio between the raw materials such that the compositional formula of the finally obtained sulfide-based inorganic solid electrolyte material is the same as or similar to Li₁₀P₃S₁₂.

### (Regarding Particle Size Distribution)

The sulfide-based inorganic solid electrolyte material according to the present embodiment is typically formed of particles from the viewpoint of applicability to a lithium ion battery or the like. In other words, the characteristics of the sulfide-based inorganic solid electrolyte material according to the present embodiment are typically particle-shaped.

By appropriately designing the particle size distribution of the particles forming the sulfide-based inorganic solid electrolyte material, there may be a case where the ionic conductivity can be further increased.

In the particle size distribution, quantitatively, the number-based median size d₅₀ can be used as an index. d₅₀ is preferably 0.1 to 10 um and more preferably 0.1 to 6.0 um. It is considered that, when d₅₀ is appropriately large, the contact surface (interface) between the particles decreases such that higher ionic conductivity can be obtained. In addition, it is considered that, when d₅₀ is not excessively large, gaps between the particles are not likely to be formed such that higher ionic conductivity can be obtained.

The number-based particle size distribution based on which the median size d₅₀ is calculated can be obtained, for example, through the following procedures including: (1) imaging the particles with an electron microscope; (2) measuring a one-direction tangential diameter (Feret diameter) of each of the particles in the obtained image; and (3) plotting the one-direction tangential diameter (Feret diameter) of each of the particles on the horizontal axis and plotting the number-based frequency on the vertical axis.

### (Other Matters)

Typically, the sulfide-based inorganic solid electrolyte material according to the present embodiment has excellent electrochemical stability. The electrochemical stability refers to, for example, a property in which a material is not likely to be oxidized and reduced in a wide voltage range. More specifically, in the sulfide-based inorganic solid electrolyte material according to the present embodiment, a maximum value of an oxidative decomposition current measured under conditions of temperature of 25°C, a sweep voltage range of 0 to 5 V, and a voltage sweep rate of 5 mV/sec is preferably 0.50 µA or lower, more preferably 0.20 µA or lower, still more preferably 0.10 µA or lower, still more preferably 0.05 µA or lower, and still more preferably 0.03 µA or lower.

When the maximum value of the oxidative decomposition current in the sulfide-based inorganic solid electrolyte material is the above-described upper limit value or lower, the oxidative decomposition of the sulfide-based inorganic solid electrolyte material in the lithium ion battery can be suppressed, which is preferable.

The lower limit value of the maximum value of the oxidative decomposition current in the sulfide-based inorganic solid electrolyte material is not particularly limited and is, for example, 0.0001 µA or higher.

The sulfide-based inorganic solid electrolyte material according to the present embodiment can be used for any application where lithium ionic conductivity is required. In particular, it is preferable that the sulfide-based inorganic solid electrolyte material according to the present embodiment is used for a lithium ion battery. More specifically, the sulfide-based inorganic solid electrolyte material according to the present embodiment is used for a positive electrode active material layer, a negative electrode active material layer, an electrolyte layer, or the like in a lithium ion battery. Further, the sulfide-based inorganic solid electrolyte material according to the present embodiment is suitably used for a positive electrode active material layer, a negative electrode active material layer, a solid electrolyte layer, or the like forming an all-solid-state lithium ion battery, and is more suitably used for a solid electrolyte layer forming an all-solid-state lithium ion battery.

Examples of the all-solid-state lithium ion battery to which the sulfide-based inorganic solid electrolyte material according to the present embodiment is applied include an all-solid-state lithium ion battery in which a positive electrode, a solid electrolyte layer, and a negative electrode are stacked in this order.

Incidentally, as a quantitative index of the lithium ionic conductivity, the lithium ionic conductivity can be used. The lithium ionic conductivity of the sulfide-based inorganic solid electrolyte material according to the present embodiment is, for example, 1.0 × 10⁻³ S/cm or higher and preferably 1.5 × 10⁻³ S/cm or higher. It is preferable that the lithium ionic conductivity is as high as possible. Realistically, the upper limit of the lithium ionic conductivity is, for example, 5.0 × 10⁻³ S/cm, specifically 3.0 × 10⁻³ S/cm, and more specifically 2.0 × 10⁻³ S/cm. The lithium ionic conductivity can be measured, for example, using a method described below in Examples.

### (Method of Manufacturing Inorganic Solid Electrolyte Material)

The sulfide-based inorganic solid electrolyte material according to the present embodiment can be obtained, preferably, using a manufacturing method including steps (A), (B), and (C) described below. In addition, it is preferable that the method of manufacturing the sulfide-based inorganic solid electrolyte material according to the present embodiment optionally further includes a step (D) described below. In this case, the step (C) may be performed before or after the step (D) or may be performed before and after the step (D).
Step (A): a step of preparing a raw material composition
Step (B): a step of obtaining a sulfide-based inorganic solid electrolyte material in a vitreous state by mechanically processing the raw material composition of the sulfide-based inorganic solid electrolyte material such that the raw material composition is vitrified in a chemical reaction
Step (C): a step of classifying the obtained sulfide-based inorganic solid electrolyte material
Step (D): a step of heating (annealing) the obtained sulfide-based inorganic solid electrolyte material in the vitreous state such that at least a part thereof is crystallized

Hereinafter, these steps will be described in detail.

### ·Step (A) of Preparing Raw Material Composition

First, the raw materials are appropriately mixed to prepare a raw material composition of the sulfide-based inorganic solid electrolyte material. Here, a mixing ratio between the respective raw materials in the raw material composition is adjusted such that the obtained sulfide-based inorganic solid electrolyte material has a desired composition ratio.

The raw material composition of the sulfide-based inorganic solid electrolyte material typically includes lithium sulfide and phosphorus sulfide and preferably further includes lithium nitride.

As described above, it is preferable to adjust a molar ratio of each of the raw materials such that the composition of the final sulfide-based inorganic solid electrolyte material is the same as or similar to Li₁₀P₃S₁₂. In other words, it is preferable to adjust the composition of the raw materials such that the molar amount (Li/P) of Li with respect to the molar amount of P is 3.2 to 3.4 and the molar amount (S/P) of S with respect to the molar amount of P is 3.9 to 4.1.

Incidentally, Li₁₀P₃S₁₂ is a lithium-rich composition. Accordingly, by using lithium nitride as the raw material, the composition is likely to be optimized.

A method of mixing the respective raw materials is not particularly limited as long as it is a mixing method capable of uniformly mixing the respective raw materials. For example, the raw materials can be mixed using a ball mill, a beads mill, a vibrating mill, an impact crushing device, a mixer (for example, a pug mixer, a ribbon mixer, a tumbler mixer, a drum mixer, or a V-type mixer), a kneader, a twin-screw kneader, an air flow grinder, or the like. On a laboratory scale, mixing using a mortar of agate, alumina, or the like may be used.

Mixing conditions such as a stirring rate, a processing time, a temperature, a reaction pressure, or a gravitational acceleration applied to the mixture during the mixing of the respective raw materials can be appropriately determined depending on the amount of the mixture processed.

The lithium sulfide used as a raw material is not particularly limited. A commercially available lithium sulfide may be used. For example, lithium sulfide obtained by reaction of lithium hydroxide and hydrogen sulfide may also be used. From the viewpoint of obtaining the high-purity sulfide-based inorganic solid electrolyte material and suppressing a side reaction, it is preferable that lithium sulfide having little impurities is used.

In the present embodiment, examples of the lithium sulfide include lithium polysulfide. As the lithium sulfide, Li₂S is preferable.

As described above, as phosphorus sulfide used as a raw material, it is preferable to use, as the raw material, P₂S₅ where the P content is more than 27.87 mass% that is defined by the stoichiometry. The details are not clear but are presumed to be that, by using P₂S₅ "including an excess amount of P" as the raw material, in the step (B) or (D), not only the formation of ordered crystal but also the formation of glass that is more disordered than crystal progress such that an appropriate amount of the P₂S₆ glass structure is formed.

From the viewpoint of further improving the availability of the raw materials and the ionic conductivity of the final sulfide-based inorganic solid electrolyte material, the P content in P₂S₅ as the raw material is preferably 28.0 to 28.3 mass%.

Lithium nitride may be used as a raw material. Here, Nitrogen in the lithium nitride is discharged into the system as N₂. Therefore, by using lithium nitride as an inorganic compound that is a raw material, only the Li composition can be increased with respect to the sulfide-based inorganic solid electrolyte material including Li, P, and S as constituent elements.

The lithium nitride used as a raw material is not particularly limited. A commercially available lithium nitride (for example, Li₃N) may be used. For example, lithium nitride obtained by reaction of metallic lithium (for example, Li foil) and nitrogen gas may also be used. From the viewpoint of obtaining the high-purity solid electrolyte material and suppressing a side reaction, it is preferable that lithium nitride having little impurities is used.

### ·Step (B) of obtaining Sulfide-Based Inorganic Solid Electrolyte Material in Vitreous State

The raw material composition obtained in the step (A) is mechanical processed such that lithium sulfide and phosphorus sulfide and preferably lithium nitride as the raw materials are vitrified in a chemical reaction. As a result, the sulfide-based inorganic solid electrolyte material in a vitreous state is obtained.

In the mechanical process refers two or more kinds of inorganic compounds are caused to mechanically collide with each other to be vitrified in a chemical reaction. Examples of the mechanical process include a mechanochemical process. The mechanochemical process refers to a method of vitrifying a target composition while applying a mechanical energy such as a shear force or an impact force.

In the step (B), it is preferable that the mechanochemical process is a dry mechanochemical process from the viewpoint of realizing the process in an environment where water or oxygen is removed at a high level.

By applying the mechanochemical process, the respective raw materials can be mixed while crushing the raw materials into fine particles. Therefore, the contact area of the respective raw materials can be increased. As a result, the reaction of each of the raw materials can be promoted. Therefore, the sulfide-based inorganic solid electrolyte material according to the present embodiment can be more efficiently obtained.

The mechanochemical process refers to a method of vitrifying a mixing target while applying a mechanical energy such as a shear force, an impact force, or a centrifugal force. Examples of a device (vitrification device) for performing the vitrification through the mechanochemical process include: a crusher and disperser such as a ball mill, a beads mill, a vibrating mill, a turbo mill, a mechano-fusion, a disc mill, or a roll mill; a rotation and impact crushing device including a mechanism as a combination of rotation (shearing stress) and impact (compressive stress) represented by a rock drill, a vibration drill, or an impact driver; and a high-pressure grinding roll. In particular, from the viewpoint of efficiently generating a very high impact energy, a ball mill or a beads mill is preferable, and a ball mill is more preferable. In addition, from the viewpoint of obtaining excellent continuous productivity, for example, a roll mill; a rotation and impact crushing device including a mechanism as a combination of rotation (shearing stress) and impact (compressive stress) represented by a rock drill, a vibration drill, or an impact driver; a high-pressure grinding roll; or a vertical mill such as a roller vertical mill or a ball vertical mill is preferable.

In particular, in the present embodiment, it is preferable to perform the step (B) using a ball mill. More specifically, it is preferable to perform the mechanochemical process for 10 to 1500 hours in total using zirconia balls having a diameter of 5 to 50 mm. When the step (B) is performed using a ball mill, powder attached to an inner wall of a ball mill device or balls may be scraped such that the scraped powder is put into the ball mill again to rest the mechanochemical process.

it is preferable that the step (B) is performed in an atmosphere where the abundance and inflow of water and oxygen are suppressed at a high level. As a result, contact between the raw material composition and water and oxygen can be suppressed at a high level.

The atmosphere where the abundance and inflow of water and oxygen are suppressed at a high level can be formed, for example, using the following method.

First, a mixing container and a sealed container for a vitrification device are disposed in a glove box. Next, in the glove box, introduction and vacuum evacuation of inert gas such as dry argon gas or dry nitrogen gas having a high purity obtained through a gas purification device are performed multiple times (preferably three or more times) . Here, in the glove box after the operation, the inert gas such as dry argon gas or dry nitrogen gas having a high purity is circulated through the gas purification device such that the oxygen concentration and the water concentration are adjusted to be preferably 1.0 ppm or less, more preferably 0.8 ppm or less, and still more preferably 0.6 ppm or less.

Next, lithium sulfide and phosphorus sulfide are put into the mixing container of the glove box and are subsequently mixed to prepare a raw material composition (refer to the step (A)). Here, the introduction of lithium sulfide and phosphorus sulfide into the mixing container of the glove box is performed in the following procedure. First, in a state where a door in a main body of the glove box is closed, lithium sulfide and phosphorus sulfide are put into a side box of the glove box. Next, in the side box, introduction and vacuum evacuation of inert gas such as dry argon gas or dry nitrogen gas having a high purity introduced from the glove box are performed multiple times (preferably three or more times) . Next, the door in the main body of the glove box is opened, lithium sulfide and phosphorus sulfide are put into the mixing container in the main body of the glove box, and the mixing container is sealed.

Next, after mixing lithium sulfide and phosphorus sulfide, the obtained raw material composition is taken out from the mixing container and is transferred to the container for a vitrification device, and the container is sealed.

By performing this operation, the abundance of water and oxygen in the sealed container containing the raw material composition can be suppressed at a higher level than in the related art, and thus the atmosphere where the abundance of water and oxygen is suppressed at a high level can be formed in the step (B).

Next, the sealed container containing the raw material inorganic composition is taken out from the glove box. Next, the sealed container is set in the vitrification device disposed in the atmosphere filled with dry gas such as dry argon gas, dry nitrogen gas, or dry air (for example, in a box filled with dry argon gas, dry nitrogen gas, or dry air) for vitrification. Here, during the vitrification, it is preferable to continuously introduce a given amount of dry gas into the atmosphere filled with dry gas. With this configuration, the atmosphere where the inflow of water and oxygen is suppressed at a high level can be formed in the step (B).

From the viewpoint of suppressing the inflow of water and oxygen in the sealed container at a high level and from the viewpoint of realizing higher airtightness, it is preferable that a packing having excellent sealing performance such as an O-ring or a ferrule packing is used for a lid portion of the sealed container.

The degree of vitrification will be supplemented. Typically, when X-ray diffraction analysis is performed using Cu-Kα rays as a radiation source, if a diffraction peak derived from the raw material is lost or decreases, it can be determined that the raw material inorganic composition is vitrified and a desired sulfide-based inorganic solid electrolyte material is obtained.

In the step (B), it is preferable that the vitrification process is performed until the lithium ionic conductivity of the sulfide-based inorganic solid electrolyte material measured using an alternating current impedance method under measurement conditions of 27.0°C, an applied voltage of 10 mV, and a measurement frequency range of 0.1 Hz to 7 MHz is preferably 1.0 × 10⁻⁴ S·cm⁻¹ or higher, more preferably 2.0 × 10⁻⁴ S · cm-¹ or higher, still more preferably 3.0 × 10⁻⁴ S · cm⁻¹ or higher, and still more preferably 4.0 × 10⁻⁴ S · cm⁻¹ or higher. As a result, a sulfide-based inorganic solid electrolyte material having further improved lithium ionic conductivity can be obtained.

### ·Classification (Sieving) Step (C)

It is preferable to classify (sieve) the obtained sulfide-based inorganic solid electrolyte material. By performing this process, for example, d₅₀ can be adjusted.

The sulfide-based inorganic solid electrolyte material may be further crushed to adjust the particle size or the like. As a specific method of the crushing process, a well-known crushing method such as air flow crushing, a mortar, a tumbling mill, or a coffee mill can be used.

From the viewpoint of avoiding contact with water in air, it is preferable that the step (C) is performed in an inert gas atmosphere or a vacuum atmosphere.

### ·Step (D) of Crystallizing at Least Part of Sulfide-Based Inorganic Solid Electrolyte Material

In the present embodiment, it is preferable to perform a step of crystallizing at least a part of the sulfide-based inorganic solid electrolyte material. In the step (D), the sulfide-based inorganic solid electrolyte material in the glass ceramic state (also referred to as "crystallized glass") is formed by heating (annealing) the obtained sulfide-based inorganic solid electrolyte material in the vitreous state such that at least a part of the sulfide-based inorganic solid electrolyte material is crystallized. By appropriately selecting heating conditions, each of the glass structures in the sulfide-based inorganic solid electrolyte material or a ratio of each of the crystal structures can be adjusted. As a result, a sulfide-based inorganic solid electrolyte material having further improved lithium ionic conductivity can be obtained.

In other words, from the viewpoint of obtaining excellent lithium ionic conductivity, it is preferable that the sulfide-based inorganic solid electrolyte material according to the present embodiment is in the glass ceramic state (crystallized glass state) .

The temperature at which the sulfide-based inorganic solid electrolyte material in the vitreous state is heated (annealed) is preferably in a range of 220°C to 500°C and more preferably 250°C to 350°C.

The time for which the sulfide-based inorganic solid electrolyte material in the vitreous state is heated (annealed) is not particularly limited as long as it is the time for which the desired sulfide-based inorganic solid electrolyte material in the glass ceramic state can be obtained. The time is, for example 0.5 to 24 hours, preferably 1 to 18 hours, still more preferably 1 to 15 hours, and still more preferably 1 to 10 hours.

A heating method is not particularly limited, and examples thereof include a method using a calcination furnace. Conditions such as the temperature or the time of heating can be appropriately adjusted for optimizing the properties of the sulfide-based inorganic solid electrolyte material.

In addition, it is preferable that the sulfide-based inorganic solid electrolyte material in the vitreous state is heated (annealed), for example, in an inert gas atmosphere. As a result, deterioration (for example, oxidation) of the sulfide-based inorganic solid electrolyte material can be prevented. Examples of the inert gas include argon gas, helium gas, and nitrogen gas. In order to prevent impurities from being mixed in a product, it is preferable that the purity of the inert gas is as high as possible. In addition, in order to avoid contact with water, the dew point is preferably -70°C or lower and more preferably -80°C or lower.

A method of introducing the inert gas is not particularly limited as long as it is a method capable of filling the mixed system with the inert gas atmosphere. Examples of the introduction method include a method of purging inert gas and a method continuously introducing inert gas at a given flow rate.

In order to obtain the sulfide-based inorganic solid electrolyte material according to the present embodiment, it is preferable to appropriately adjust the respective steps. The method of manufacturing the sulfide-based inorganic solid electrolyte material according to the present embodiment is not limited to the above-described method. By appropriately adjusting various conditions, the sulfide-based inorganic solid electrolyte material according to the present embodiment can be obtained.

### <Solid electrolyte>

A solid electrolyte according to the present embodiment includes the sulfide-based inorganic solid electrolyte material according to the present embodiment.

As components other than the sulfide-based inorganic solid electrolyte material according to the present embodiment, the solid electrolyte according to the present embodiment may include or may not include various kinds of solid electrolyte materials other than the sulfide-based inorganic solid electrolyte material according to the present embodiment, for example, within a range where the object of the present invention does not deteriorate.

The solid electrolyte according to the present embodiment may include or may not include various kinds of solid electrolyte materials other than the sulfide-based inorganic solid electrolyte material according to the present embodiment. The solid electrolyte material other than the sulfide-based inorganic solid electrolyte material according to the present embodiment is not particularly limited as long as they have ionic conductivity and insulating properties. In general, a solid electrolyte material that is used for a lithium ion battery can be used. Examples of the solid electrolyte materials include: an inorganic solid electrolyte material such as a sulfide-based inorganic solid electrolyte material other than the sulfide-based inorganic solid electrolyte material according to the present embodiment, an oxide-based inorganic solid electrolyte material, or other lithium-based inorganic solid electrolyte materials; and an organic solid electrolyte material such as a polymer electrolyte.

Examples of the sulfide-based inorganic solid electrolyte material other than the sulfide-based inorganic solid electrolyte material according to the present embodiment include a Li₂S-P₂S₅ material, a Li₂S-SiS₂ material, a Li₂S-GeS₂ material, a Li₂S-Al₂S₃ material, a Li₂S-SiS₂-Li₃PO₄ material, a Li₂S-P₂S₅-GeS₂ material, a Li₂S-Li₂O-P₂S₅-SiS₂ material, a Li₂S-GeS₂-P₂S₅-SiS₂ material, a Li₂S-SnS₂-P₂S₅-SiS₂ material, a Li₂S-P₂S₅-Li₃N material, a Li₂S_{2+X}-P₄S₃ material, and a Li₂S-P₂S₅-P₄S₃ material. Among these, one kind may be used singly, or two or more kinds may be used in combination.

Among these, the Li₂S-P₂S₅ material is preferable from the viewpoint that it has excellent lithium ionic conductivity and has stability to the extent that decomposition or the like does not occur in a wide voltage range. Here, for example, the Li₂S-P₂S₅ material refers to an inorganic material obtained by a chemical reaction caused by mechanically processing an inorganic composition including at least Li₂S (lithium sulfide) and P₂S₅.

Here, in the present embodiment, examples of the lithium sulfide include lithium polysulfide.

Examples of the oxide-based inorganic solid electrolyte material include: a NASICON type such as LiTi₂(PO₄)₃, LiZr₂(PO₄)₃, or LiGe₂(PO₄)_{3;} a perovskite type such as (La_{0.5+x}Li_{0.5-3x})TiO₃; a Li₂O-P₂O₅ material; and a Li₂O-P₂O₅-Li₃N material.

Examples of the other lithium-based inorganic solid electrolyte material include LiPON, LiNbO₃, LiTaO₃, Li₃PO₄, LiPO₄₋ₓNₓ (x satisfies 0 < x ≤ 1), LiN, LiI, and LISICON.

Further, a glass ceramic obtained by precipitating crystal of the inorganic solid electrolytes can also be used as the inorganic solid electrolyte material.

As the organic solid electrolyte material, a polymer electrolyte such as a dry polymer electrolyte or a gel electrolyte can be used.

As the polymer electrolyte, in general, those that are used for a lithium ion battery can be used.

### <Solid Electrolyte Membrane>

The solid electrolyte membrane according to the present embodiment includes a solid electrolyte including the sulfide-based inorganic solid electrolyte material according to the present embodiment as a main component.

The solid electrolyte membrane according to the present embodiment is used, for example, as a solid electrolyte layer forming an all-solid-state lithium ion battery.

Examples of the all-solid-state lithium ion battery to which the solid electrolyte membrane according to the present embodiment is applied include an all-solid-state lithium ion battery in which a positive electrode, a solid electrolyte layer, and a negative electrode are stacked in this order. In this case, the solid electrolyte layer is formed of the solid electrolyte membrane.

The average thickness of the solid electrolyte membrane according to the present embodiment is preferably 5 pm or more and 500 um or less, more preferably 10 um or more and 200 um or less, and still more preferably 20 um or more and 100 um or less. When the average thickness of the solid electrolyte membrane is the lower limit value or more, the loss of the solid electrolyte or the cracking of the solid electrolyte membrane surface can be further suppressed. In addition, when the average thickness of the solid electrolyte membrane is the upper limit value or less, the impedance of the solid electrolyte membrane can be further decreased. As a result, the battery characteristics of the obtained all-solid-state lithium ion battery can be further improved.

It is preferable that the solid electrolyte membrane according to the present embodiment is a compact obtained by compression-molding the particle-shaped solid electrolyte including the sulfide-based inorganic solid electrolyte material according to the present embodiment. That is, it is preferable that the particle-shaped solid electrolyte is compression-molded to obtain a solid electrolyte membrane having a given strength due to the anchor effect between the solid electrolyte material particles.

By obtaining the compact, the solid electrolyte particles bind to each other, and the strength of the obtained solid electrolyte membrane can be further improved. As a result, the loss of the solid electrolyte or the cracking of the solid electrolyte membrane surface can be further suppressed.

The content of the sulfide-based inorganic solid electrolyte material according to the present embodiment in the solid electrolyte membrane according to the present embodiment is preferably 50 mass% or more, more preferably 60 mass% or more, still more preferably 70 mass% or more, still more preferably 80 mass% or more, and still more preferably 90 mass% or more with respect to 100 mass% of the total mass of the solid electrolyte membrane. As a result, the contact between the solid electrolyte particles can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be further improved.

The upper limit of the content of the sulfide-based inorganic solid electrolyte material according to the present embodiment in the solid electrolyte membrane according to the present embodiment is not particularly limited and is, for example, 100 mass% or less.

The planar shape of the solid electrolyte membrane is not particularly limited and can be appropriately selected according to the shape of an electrode or a current collector. For example, the planar shape is rectangular.

The solid electrolyte membrane according to the present embodiment may include a binder resin. When the solid electrolyte membrane according to the present embodiment includes the binder resin, the content of the binder resin is preferably less than 0.5 mass%, more preferably 0.1 mass% or less, still more preferably 0.05 mass% or less, and still more preferably 0.01 mass% or less with respect to 100 mass% of the total mass of the solid electrolyte membrane. In addition, it is more preferable that the solid electrolyte membrane according to the present embodiment does not substantially include the binder resin, and it is most preferable that the solid electrolyte membrane according to the present embodiment does not include the binder resin.

As a result, the contact between the solid electrolyte particles can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be improved.

Just to be sure, "Substantially not including the binder resin" represents that the binder resin may be included to the extent that the effect of the present embodiment does not deteriorate. In addition, when an adhesive resin layer is provided between the solid electrolyte layer and the positive electrode or the negative electrode, an adhesive resin derived from the adhesive resin layer present in the vicinity of an interface between the solid electrolyte layer and the adhesive resin layer is excluded from "the binder resin in the solid electrolyte membrane".

In order to bind the inorganic solid electrolyte material particles to each other, the binder resin refers to a binder that is generally used for a lithium ion battery. Examples of the binder resin include polyvinyl alcohol, poly(meth)acrylic acid, carboxymethyl cellulose, polytetrafluoroethylene, polyvinylidene fluoride, styrene-butadiene rubber, and polyimide.

The solid electrolyte membrane according to the present embodiment can be obtained, for example, by (i) depositing the particle-shaped solid electrolyte on a cavity surface of a mold or a substrate surface in a film shape and (ii) subsequently compress-molding the solid electrolyte deposited in a film shape.

In (ii), a method of compress-molding the solid electrolyte is not particularly limited. For example, when the particle-shaped solid electrolyte is deposited on a cavity surface of a mold, a method such as pressing by a mold and a stamp can be used, and when the particle-shaped solid electrolyte is deposited on a substrate surface, a method such as pressing, roll pressing, or flat pressing by a mold and a stamp can be used. The pressure at which the solid electrolyte is compressed is, for example, 10 to 500 MPa.

Optionally, the inorganic solid electrolyte deposited in a film shape may be compressed and heated. The solid electrolyte particles are fused and bound to each other by performing the heating and compressing, and the strength of the obtained solid electrolyte membrane can be further improved. As a result, the loss of the solid electrolyte or the cracking of the solid electrolyte membrane surface can be further suppressed. The temperature at which the solid electrolyte is heated is, for example, 40° to 500°C.

### <Lithium Ion Battery>

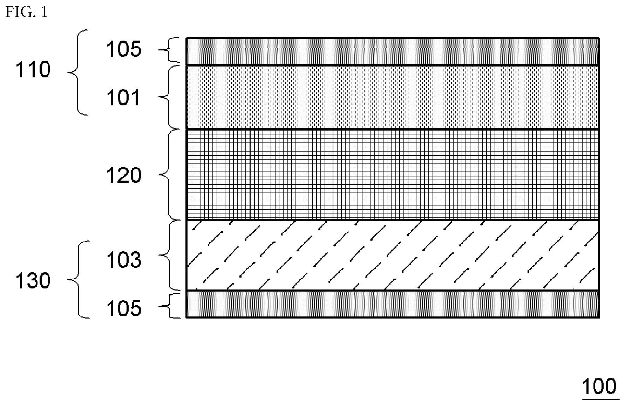

Fig. 1 is a cross-sectional view showing an example (lithium ion battery 10) of a structure of a lithium ion battery according to the present embodiment.

The lithium ion battery 100 includes: a positive electrode 110 including a positive electrode active material layer 101; an electrolyte layer 120; and a negative electrode 130 including a negative electrode active material layer 103. At least one of the positive electrode active material layer 101, the negative electrode active material layer 103, and the electrolyte layer 120 includes the sulfide-based inorganic solid electrolyte material according to the present embodiment. In addition, it is preferable that all of the positive electrode active material layer 101, the negative electrode active material layer 103, and the electrolyte layer 120 include the sulfide-based inorganic solid electrolyte material according to the present embodiment.

In the present embodiment, unless specified otherwise, a layer including a positive electrode active material will be referred to as "the positive electrode active material layer 101".

Optionally, the positive electrode 110 may or may not further include a current collector 105 in addition to the positive electrode active material layer 101. In addition, in the present embodiment, unless specified otherwise, a layer including a negative electrode active material will be referred to as "the negative electrode active material layer 103". Optionally, the negative electrode 130 may or may not further include the current collector 105 in addition to the negative electrode active material layer 103.

The shape of the lithium ion battery 100 according to the present embodiment is not particularly limited. Examples of the shape include a cylindrical shape, a coin shape, a square shape, a film shape, and any other shape.

The lithium ion battery 100 is manufactured using a generally well-known method. For example, the lithium ion battery 100 is prepared by forming a laminate including the positive electrode 110, the electrolyte layer 120, and the negative electrode 130 in a cylindrical shape, a coin shape, a square shape, a film shape, or any other shape and optionally filling the laminate with a non-aqueous electrolytic solution.

### (Positive Electrode)

The material forming the positive electrode 110 is not particularly limited, and a positive electrode that is generally used for a lithium ion battery can be used. A method of manufacturing the positive electrode 110 is not particularly limited, and the positive electrode 110 can be manufactured using a generally well-known method. For example, the positive electrode 110 can be obtained by forming the positive electrode active material layer 101 including the positive electrode active material on a surface of the current collector 105 such as aluminum foil.

The thickness or density of the positive electrode active material layer 101 is appropriately determined depending on the intended use of the battery and, thus can be set based on generally well-known information without any particular limitation.

The positive electrode active material layer 101 includes the positive electrode active material.

The positive electrode active material is not particularly limited, and a generally well-known material can be used. For example, a composite oxide such as a lithium cobalt oxide (LiCoO₂), a lithium nickel oxide (LiNiO₂), a lithium manganese oxide (LiMn₂O₄), a solid solution oxide (Li₂MnO₃-LiMO₂ (M=Co, Ni, or the like)), lithium-manganese- nickel oxide (LiNi_{1/3}Mn_{1/3}Co_{1/3}O₂), or an olivine-type lithium phosphate (LiFePO₄); a conductive polymer such as polyaniline or polypyrrole; a sulfide-based positive electrode active material such as Li₂S, CuS, a Li-Cu-S compound, TiS₂, FeS, MoS₂, a Li-Mo-S compound, a Li-Ti-S compound, a Li-V-S compound, or a Li-Fe-S compound; or a material including sulfur as an active material such as acetylene black impregnated with sulfur, porous carbon impregnated with sulfur, or mixed powder including sulfur and carbon can be used. Among these positive electrode active materials, one kind may be used singly, or two or more kinds may be used in combination.

Among these, from the viewpoints of obtaining higher discharge capacity density and obtaining higher cycle characteristics, a sulfide-based positive electrode active material is preferable, and one kind or two or more kinds selected from a Li-Mo-S compound, a Li-Ti-S compound, and a Li-V-S compound are more preferable.

Here, the Li-Mo-S compound includes Li, Mo, and S as constituent elements and can be typically obtained by a chemical reaction caused by mechanically processing an inorganic composition including molybdenum sulfide and lithium sulfide as raw materials.

In addition, the Li-Ti-S compound includes Li, Ti, and S as constituent elements and can be typically obtained by a chemical reaction caused by mechanically processing an inorganic composition including titanium sulfide and lithium sulfide as raw materials.

The Li-V-S compound includes Li, V, and S as constituent elements and can be typically obtained by a chemical reaction caused by mechanically processing an inorganic composition including vanadium sulfide and lithium sulfide as raw materials.

The positive electrode active material layer 101 may include or may not include, as components other than the positive electrode active material, for example, one or more materials selected from a binder resin, a thickener, a conductive auxiliary agent, a solid electrolyte material, and the like. Hereinafter, each of the materials such as the binder resin, the thickener, the conductive auxiliary agent, and the solid electrolyte material will be described.

The positive electrode active material layer 101 may include a binder resin having a function of binding the positive electrode active material particles to each other and binding the positive electrode active material and the current collector 105 to each other.

The binder resin is not particularly limited as long as it is a typical binder resin that can be used for a lithium ion battery. Examples of the binder resin include polyvinyl alcohol, poly(meth) acrylic acid, carboxymethyl cellulose, polytetrafluoroethylene, polyvinylidene fluoride, styrene-butadiene rubber, and polyimide. Among the binders, one kind may be used singly, or two or more kinds may be used in combination.

From the viewpoint of securing the fluidity of a slurry suitable for application, the positive electrode active material layer 101 may include a thickener. The thickener is not particularly limited as long as it is a typical thickener that can be used for a lithium ion battery. Examples of the thickener include a cellulose-based polymer such as carboxymethyl cellulose, methyl cellulose, or hydroxypropyl cellulose and an ammonium salt and an alkali metal salt thereof; and a water-soluble polymer such as polycarboxylic acid, polyethylene oxide, polyvinyl pyrrolidone, poly(meth) acrylate, or polyvinyl alcohol. Among the thickeners, one kind may be used singly, or two or more kinds may be used in combination.

From the viewpoint of improving the conductivity of the positive electrode 110 the positive electrode active material layer 101 may include a conductive auxiliary agent. The conductive auxiliary agent is not particularly limited as long as it is a typical conductive auxiliary agent that can be used for a lithium ion battery. Examples of the conductive auxiliary agent include a carbon black such as Acetylene black or Ketjen black and a carbon material such as a vapor-grown carbon fiber. When the conductive auxiliary agent is used, one kind may be used singly, or two or more kinds may be used in combination.

The positive electrode 110 may include a solid electrolyte including the sulfide-based inorganic solid electrolyte material according to the present embodiment or may include a solid electrolyte including a solid electrolyte material other than the sulfide-based inorganic solid electrolyte material according to the present embodiment. The solid electrolyte material other than the sulfide-based inorganic solid electrolyte material according to the present embodiment is not particularly limited as long as they have ionic conductivity and insulating properties. In general, a solid electrolyte material that is used for a lithium ion battery can be used. Examples of the solid electrolyte material include: an inorganic solid electrolyte material such as a sulfide-based inorganic solid electrolyte material, an oxide-based inorganic solid electrolyte material, or other lithium-based inorganic solid electrolyte materials; and an organic solid electrolyte material such as a polymer electrolyte. More specifically, the inorganic solid electrolyte material described above regarding the description of the solid electrolyte according to the present embodiment can be used.

The mixing ratio between various materials in the positive electrode active material layer 101 is appropriately determined depending on the intended use of the battery and, thus can be set based on generally well-known information without any particular limitation.

### (Negative Electrode)

The material forming the negative electrode 130 is not particularly limited, and a positive electrode that is generally used for a lithium ion battery can be used. A method of manufacturing the negative electrode 130 is not particularly limited, and the negative electrode 130 can be manufactured using a generally well-known method. For example, the negative electrode 130 can be obtained by forming the negative electrode active material layer 103 including the negative electrode active material on a surface of the current collector 105 such as copper.

The thickness or density of the negative electrode active material layer 103 is appropriately determined depending on the intended use of the battery and, thus can be set based on generally well-known information without any particular limitation.

The negative electrode active material layer 103 includes the negative electrode active material.

The negative electrode active material is not particularly limited as long as it is a typical negative electrode active material that can be used for a negative electrode of a lithium ion battery. Examples of the negative electrode active material include: a carbon material such as natural graphite, artificial graphite, resinous coal, carbon fiber, activated charcoal, hard carbon, or soft carbon; a metal material mainly formed of lithium, a lithium alloy, tin, a tin alloy, silicon, a silicon alloy, gallium, a gallium alloy, indium, an indium alloy, aluminum, or an aluminum alloy; a conductive polymer such as polyacene, polyacetylene, or polypyrrole; and a lithium titanium composite oxide (for example, Li₄Ti₅O₁₂). Among these negative electrode active materials, one kind may be used singly, or two or more kinds may be used in combination.

The negative electrode active material layer 103 is not particularly limited and may include, as components other than the negative electrode active material, for example, one or more materials selected from a binder resin, a thickener, a conductive auxiliary agent, a solid electrolyte material, and the like. These materials are not particularly limited, and examples thereof are the same as those of the materials used for the positive electrode 110.

The mixing ratio between various materials in the negative electrode active material layer 103 is appropriately determined depending on the intended use of the battery and, thus can be set based on generally well-known information without any particular limitation.

### (Electrolyte Layer)

The electrolyte layer 120 is a layer formed between the positive electrode active material layer 101 and the negative electrode active material layer 103.

Examples of the electrolyte layer 120 include a separator impregnated with a non-aqueous electrolytic solution and a solid electrolyte layer including a solid electrolyte.

The separator is not particularly limited as long as it has a function of electrically insulating the positive electrode 110 and the negative electrode 130 to allow transmission of lithium ions. For example, a porous membrane can be used.

As the porous membrane, a microporous polymer film is suitably used, and examples of a material thereof include polyolefin, polyimide, polyvinylidene fluoride, and polyester. In particular, a porous polyolefin film is preferable, and specific examples thereof include a porous polyethylene film and a porous polypropylene film.

The non-aqueous electrolytic solution with which the separator is impregnated is obtained by dissolving an electrolyte in a solvent. As the electrolyte, any well-known lithium salt can be used, and the electrolyte may be selected depending on the kind of the active material. Examples of the electrolyte include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, and a lithium lower aliphatic carboxylate.

The solvent in which the electrolyte is dissolved is not particularly limited as long as it is typically used as a liquid in which the electrolyte is dissolved. Examples of the solvent include: a carbonate such as ethylene carbonate (EC), propylene carbonate (PC), butylene carbonate (BC), dimethyl carbonate (DMC), diethyl carbonate (DEC), methyl ethyl carbonate (MEC), or vinylene carbonate (VC); a lactone such as γ-butyrolactone or γ-valerolactone; an ether such as trimethoxy methane, 1,2-dimethoxyethane, diethyl ether, 2-ethoxy ethane, tetrahydrofuran, or 2-methyl tetrahydrofuran; a sulfoxide such as dimethyl sulfoxide; an oxolane such as 1,3-dioxolane or 4-methyl-1,3-dioxolane; a nitrogen-containing solvent such as acetonitrile, nitromethane, formamide, or dimethylformamide; an organic acid ester such as methyl formate, methyl acetate, ethyl acetate, butyl acetate, methyl propionate, or ethyl propionate; a phosphate triester or a diglyme; a triglyme; a sulfolane such as sulfolane or methyl sulfolane; an oxazolidinone such as 3-methyl-2-oxazolidinone; and a sultone such as 1,3-propanesultone, 1,4-butanesultone, or naphthasultone. Among these, one kind may be used singly, or two or more kinds may be used in combination.

The solid electrolyte layer is a layer formed between the positive electrode active material layer 101 and the negative electrode active material layer 103, and is formed of a solid electrolyte including a solid electrolyte material. The solid electrolyte in the solid electrolyte layer is not particularly limited as long as it has lithium ionic conductivity. Note that, in the present embodiment, it is preferable that the solid electrolyte includes the sulfide-based inorganic solid electrolyte material according to the present embodiment.

The content of the solid electrolyte in the solid electrolyte layer according to the present embodiment is not particularly limited as long as it has a proportion where desired performance can be obtained. For example, the content of the solid electrolyte is 10 vol% or more and 100 vol% or less and preferably 50 vol% or more and 100 vol% or less. In particular, in the present embodiment, it is preferable that the solid electrolyte layer is formed of only the solid electrolyte including the sulfide-based inorganic solid electrolyte material according to the present embodiment.

The solid electrolyte layer according to the present embodiment may include a binder resin. By including the binder resin, a flexible solid electrolyte layer can be obtained. Examples of the binder resin include a fluorine-containing binder such as polytetrafluoroethylene or polyvinylidene fluoride. The thickness of the solid electrolyte layer is, for example, 0.1 um or more and 1000 um or less and preferably 0.1 um or more and 300 um or less.

Hereinafter, the embodiment of the present invention has been described. However, the embodiment is merely an example of the present invention, and various configurations other than the above-described configurations can be adopted. In addition, the present invention is not limited to the above-described embodiments, and modifications, improvements, and the like within a range where the object of the present invention can be achieved are included in the present invention.

### Examples

The embodiments of the present invention will be described in more detail based on Examples and Comparative Examples. Just to be sure, the present invention is not limited to only Examples.

### <Manufacturing of Sulfide-Based Inorganic Solid Electrolyte Material>

### (Example 1)

First, as raw materials, Li₂S (manufactured by Furukawa Co., Ltd., purity: 99.9%), P₂S₅ (manufactured by Perimeter Solutions), and Li₃N (manufactured by Furukawa Co., Ltd.) were prepared. As P₂S₅, a product having a P content of 28.1 mass% was used from some P₂S₅product having different lot numbers that were obtained from Perimeter solutions. The P content was measured by ICP emission spectroscopy using an ICP emission spectrometer (manufactured by Seiko Instruments Inc., SPS 3000).

Next, in an argon glove box, Li₂S powder, P₂S₅ powder, and Li₃N powder were weighed (Li₂S:P₂S₅: Li₃N = 27:9:2 (molar ratio)). These powders were mixed in an agate mortar for 10 minutes. As a result, mixed powder was obtained.

Next, 500 g of the mixed powder was weighed and was put into an alumina pot (inner volume: 5.0 L) together with 7500 g of zirconia balls having a diameter of ϕ 25 mm and 700 g of zirconia balls having a diameter of ϕ 10 mm. The powder was crushed and mixed (mechanochemically processed) using a ball mill (rotation speed: 100 rpm) for 48 hours.

Next, after crushing and mixing, the powder attached to an inner wall of the pot or the balls was scraped. Next, the powder was put again into the pot together with balls, and was crushed and mixed using a ball mill (rotation speed: 100 rpm) for the same time as described above. This operation from the scraping to the crushing was repeated for 700 hours in total. As a result, a sulfide-based inorganic solid electrolyte material (Li₁₀P₃S₁₂) in a vitreous state was obtained.

The crushing and mixing (mechanochemical process) was performed in an atmosphere where the abundance and inflow of water and oxygen were suppressed at a higher level.

Next, the sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained.

The obtained sulfide-based inorganic solid electrolyte material in a glass ceramic state was classified through a sieve having a pore size of 20 um to remove coarse particles.

As a result, a sulfide-based inorganic solid electrolyte material was manufactured.

It was verified that the composition of the obtained sulfide-based inorganic solid electrolyte material was Li₁₀P₃S₁₂ by ICP emission spectroscopy using an ICP emission spectrometer (manufactured by Seiko Instruments Inc., SPS 3000).

### (Example 2)

First, as raw materials, Li₂S (manufactured by Furukawa Co., Ltd., purity: 99.9%), P₂S₅ (manufactured by Perimeter Solutions), and Li₃N (manufactured by Furukawa Co., Ltd.) were used. As P₂S₅, a product having a P content of 28.0 mass% was used from some P₂S₅ product having different lot numbers that were obtained from Perimeter solutions (the method of measuring the P content was the same as that of Example 1) .

Next, in an argon glove box, Li₂S powder, P₂S₅ powder, and Li₃N powder were weighed (Li₂S:P₂S₅: Li₃N = 27:9:2 (molar ratio)). These powders were mixed in an agate mortar for 10 minutes. As a result, mixed powder was obtained.

Next, 500 g of the mixed powder was weighed and was put into an alumina pot (inner volume: 5.0 L) together with 7500 g of zirconia balls having a diameter of ϕ 25 mm and 700 g of zirconia balls having a diameter of ϕ 10 mm. The powder was crushed and mixed (mechanochemically processed) using a ball mill (rotation speed: 100 rpm) for 48 hours.

Next, after crushing and mixing, the powder attached to an inner wall of the pot or the balls was scraped. Next, the powder was put again into the pot together with balls, and was crushed and mixed using a ball mill (rotation speed: 100 rpm) for the same time as described above. This operation from the scraping to the crushing was repeated for 700 hours in total. As a result, a sulfide-based inorganic solid electrolyte material (Li₁₀P₃S₁₂) in a vitreous state was obtained.

Next, the sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained.

Next, the obtained sulfide-based inorganic solid electrolyte material in a glass ceramic state was classified through a sieve having a pore size of 20 um to remove coarse particles.

As a result, a sulfide-based inorganic solid electrolyte material was manufactured.

It was verified that the composition of the obtained sulfide-based inorganic solid electrolyte material was Li₁₀P₃S₁₂ by ICP emission spectroscopy using an ICP emission spectrometer (manufactured by Seiko Instruments Inc., SPS 3000).

### (Example 3)

First, as raw materials, Li₂S (manufactured by Furukawa Co., Ltd., purity: 99.9%), P₂S₅ (manufactured by Kanto Chemical Co., Inc.), and Li₃N (manufactured by Furukawa Co., Ltd.) were used. As P₂S₅, a product having a P content of about 27.9 mass% that was higher than 27.87 mass% was used from some P₂S₅ product having different lot numbers that were obtained from Kanto Chemical Co., Inc. (the method of measuring the P content was the same as that of Example 1).

Next, in an argon glove box, Li₂S powder, P₂S₅ powder, and Li₃N powder were weighed (Li₂S:P₂S₅: Li₃N = 27:9:2 (molar ratio)). These powders were mixed in an agate mortar for 10 minutes. As a result, mixed powder was obtained.

Next, 500 g of the mixed powder was weighed and was put into an alumina pot (inner volume: 5.0 L) together with 7500 g of zirconia balls having a diameter of ϕ 25 mm and 700 g of zirconia balls having a diameter of ϕ 10 mm. The powder was crushed and mixed (mechanochemically processed) using a ball mill (rotation speed: 100 rpm) for 48 hours.

Next, after crushing and mixing, the powder attached to an inner wall of the pot or the balls was scraped. Next, the powder was put again into the pot together with balls, and was crushed and mixed using a ball mill (rotation speed: 100 rpm) for the same time as described above. This operation from the scraping to the crushing was repeated for 700 hours in total. As a result, a sulfide-based inorganic solid electrolyte material (Li₁₀P₃S₁₂) in a vitreous state was obtained.

Next, the sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained.

Next, the obtained sulfide-based inorganic solid electrolyte material in a glass ceramic state was classified through a sieve having a pore size of 20 um to remove coarse particles.

As a result, a sulfide-based inorganic solid electrolyte material was manufactured.

It was verified that the composition of the obtained sulfide-based inorganic solid electrolyte material was Li₁₀P₃S₁₂ by ICP emission spectroscopy using an ICP emission spectrometer (manufactured by Seiko Instruments Inc., SPS 3000).

### (Comparative Example 1)

In Comparative Example 1, unlike Examples 1 to 3, a sulfide-based inorganic solid electrolyte material having a composition represented by Li₉P₃S₁₂ was manufactured without using Li₃N as a raw material. The specific procedures are as follows.

First, as raw materials, Li₂S (manufactured by Furukawa Co., Ltd., purity: 99.9%) and P₂S₅ (manufactured by Perimeter Solutions; P content: 28.1 mass%; the method of measuring the P content was the same as that of Example 1) were prepared.

Next, in an argon glove box, Li₂S powder and P₂S₅ powder, were precisely weighed (Li₂S:P₂S₅ = 75:25 (molar ratio) These powders were mixed in an agate mortar for 10 minutes. As a result, mixed powder was obtained.

Next, 500 g of the mixed powder was weighed and was put into an alumina pot (inner volume: 5.0 L) together with 7500 g of zirconia balls having a diameter of ϕ 25 mm and 700 g of zirconia balls having a diameter of ϕ 10 mm. The powder was crushed and mixed (mechanochemically processed) using a ball mill (rotation speed: 100 rpm) for 48 hours.

Next, after crushing and mixing, the powder attached to an inner wall of the pot or the balls was scraped. Next, the powder was put again into the pot together with balls, and was crushed and mixed using a ball mill (rotation speed: 100 rpm) for the same time as described above. This operation from the scraping to the crushing was repeated for 700 hours in total. As a result, a sulfide-based inorganic solid electrolyte material (Li₉P₃S₁₂) in a vitreous state was obtained.

Next, the sulfide-based inorganic solid electrolyte material in the vitreous state was annealed in argon at 300°C for 7 hours. As a result, the sulfide-based inorganic solid electrolyte material (Li₉P₃S₁₂) in the glass ceramic state was obtained.

Next, the obtained sulfide-based inorganic solid electrolyte material in a glass ceramic state was classified through a sieve having a pore size of 20 um to remove coarse particles.

As a result, a sulfide-based inorganic solid electrolyte material was manufactured.

It was verified that the composition of the obtained sulfide-based inorganic solid electrolyte material was Li₉P₃S₁₂ by ICP emission spectroscopy using an ICP emission spectrometer (manufactured by Seiko Instruments Inc., SPS 3000).

### (Comparative Example 2)

In Comparative Example 2, unlike Examples 1 to 3, P₂S₅ having a relatively low P content was used as a raw material. The specific procedures are as follows.

First, as raw materials, Li₂S (manufactured by Furukawa Co., Ltd., purity: 99.9%), P₂S₅ (manufactured by Perimeter Solutions), and Li₃N (manufactured by Furukawa Co., Ltd.) were prepared. As P₂S₅, a product having a P content of 27.7 mass% was used from some P₂S₅ product having different lot numbers that were obtained from Perimeter solutions (the method of measuring the P content was the same as that of Example 1).

Next, in an argon glove box, Li₂S powder, P₂S₅ powder, and Li₃N powder were weighed (Li₂S:P₂S₅: Li₃N = 27:9:2 (molar ratio)). These powders were mixed in an agate mortar for 10 minutes. As a result, mixed powder was obtained.

Next, 500 g of the mixed powder was weighed and was put into an alumina pot (inner volume: 5.0 L) together with 7500 g of zirconia balls having a diameter of ϕ 25 mm and 700 g of zirconia balls having a diameter of ϕ 10 mm. The powder was crushed and mixed (mechanochemically processed) using a ball mill (rotation speed: 100 rpm) for 48 hours.

Next, after crushing and mixing, the powder attached to an inner wall of the pot or the balls was scraped. Next, the powder was put again into the pot together with balls, and was crushed and mixed using a ball mill (rotation speed: 100 rpm) for the same time as described above. This operation from the scraping to the crushing was repeated for 700 hours in total. As a result, a sulfide-based inorganic solid electrolyte material (Li₁₀P₃S₁₂) in a vitreous state was obtained.

Next, the sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained.

Next, the obtained sulfide-based inorganic solid electrolyte material in a glass ceramic state was classified through a sieve having a pore size of 20 um to remove coarse particles.

As a result, a sulfide-based inorganic solid electrolyte material was manufactured.

It was verified that the composition of the obtained sulfide-based inorganic solid electrolyte material was Li₁₀P₃S₁₂ by ICP emission spectroscopy using an ICP emission spectrometer (manufactured by Seiko Instruments Inc., SPS 3000).

### <³¹P-NMR measurement>

By using the sulfide-based inorganic solid electrolyte material obtained in each of Examples and Comparative Examples as a sample, phosphorus-31 nuclear magnetic resonance spectroscopy was performed as follows. Next, waveform separation was performed.

In a glove bag purged with N₂, a measurement sample tube having a diameter of 3.2 mm was filled with the sample. This sample was set in the device, and was spun (magic angle spinning (MAS)) in a state where it was inclined at a magic angle (54.7 degrees) with respect to an external magnetic field for the measurement.

The details of the NMR measurement conditions are as follows.
·Observation frequency: 242.95 MHz
·Pulse width: 90° pulse
·Pulse waiting time: 2800 seconds
·Number of integrations: 64 times
·Measurement mode: a single pass method
·MAS rate: 12 kHz
·Reference material: (NH₄)₂HPO₄·1.33 ppm
·Device: JNM-ECA-600 manufactured by JEOL RESONANCE Inc.

Using software capable of waveform separation and using Gaussian functions, waveform separation was performed on the obtained NMR spectrum to obtain peaks derived from the PS₄ glass structure, peaks derived from the PS₄ crystal structure, peaks derived from the P₂S₇ glass structure, peaks derived from the P₂S₇ crystal structure, peaks derived from the P₂S₆ glass structure, and peaks derived from the P₂S₆ crystal structure. The area of each of the Gaussian functions was obtained as the total area of the peaks derived from each of the structures. During the waveform separation, a maximum position (corresponding to a chemical shift of each of the structures), a full width at half maximum, or a maximum value of each of the Gaussian functions was optimized such that the obtained NMR spectrum was reliably reproduced. Note that the maximum position of each of the Gaussian functions was optimized to be in the numerical range shown in Table 1.

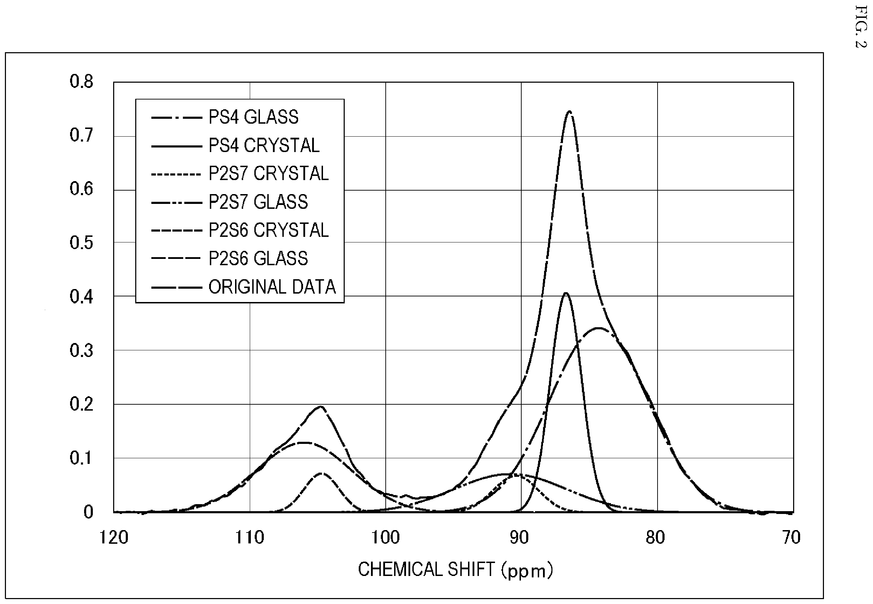

For reference, the ³¹P-NMR spectrum (original data and the waveform separation result) of the sulfide-based inorganic solid electrolyte material according to Example 1 is shown in Fig. 2.

### <Measurement of Particle Size/Calculation of Particle Size Distribution>

Using public image processing software (public freeware, ImageJ, v 1.52a) of National Institutes of Health, a SEM image of the obtained sulfide-based inorganic solid electrolyte material was analyzed. Based on this analysis, the particle size distribution was obtained. d₅₀ was obtained from the obtained particle size distribution.

In the procedure, first, a carbon tape is bonded to a sample stage of a SEM, and a small amount of the sulfide-based inorganic solid electrolyte material was bonded to the carbon tape such that the particles thereof were thinly spread out.

Next, a SEM image of the sulfide-based inorganic solid electrolyte material was obtained (resolution: 1280 × 960 pixels). The obtained SEM image was read by ImageJ. Calibration was performed based on scale displayed in the SEM image. Next, the image was converted into a binary image of black and white. At this time, a threshold was set to clarify contours of the particles. When particles overlap each other in the obtained monochrome image, the separation of the overlapping of the particles was performed using a watershed method as image processing by ImageJ. By performing particle analysis as image analysis by ImageJ, the results of measuring particle sizes by Feret diameter were obtained. In each of Examples and Comparative Examples, the particle sizes of 3000 or more particles were measured.

The obtained results of measuring the particle sizes were read by EXCEL (registered trade name) of spreadsheet software by Microsoft Corporation to obtain the particle size distribution. The median size d₅₀ was obtained from the particle size distribution.

In all of Examples and Comparative Examples, d₅₀ was in a range of 0.1 to 10 µm.

### <Evaluation: Measurement of Lithium Ionic Conductivity>

In each of the sulfide-based inorganic solid electrolyte materials obtained in each of Examples and Comparative Examples, the lithium ionic conductivity was measured using an alternating current impedance method.

For the measurement of the lithium ionic conductivity, a potentiostat/galvanostat SP-300 (manufactured by Bio-Logic Sciences Instruments) was used. The size of the sample was diameter: 9.5 mm and thickness: 1.2 to 2.0 mm. Measurement conditions were applied voltage: 10 mV, measurement temperature: 27.0°C, and measurement frequency range: 0.1 Hz to 7 MHz, and electrode: Li foil.

150 mg of the powdery sulfide-based inorganic solid electrolyte material obtained in each of Examples and Comparative Examples was pressed using a press machine at 270 MPa for 10 minutes, and the plate-shaped sulfide-based inorganic solid electrolyte material having a diameter of 9.5 mm and a thickness of 1.2 to 2.0 mm was obtained and used as the sample for the measurement of the lithium ionic conductivity.

Various information is collectively shown in Tables 2 and 3. Both of Tables 2 and 3 collectively show the information of Examples 1 to 3 and Comparative Examples 1 and 2. (i) In Table 2, the area of the peaks derived from the structure represents the area of the peaks derived from each of the structures when the total area of the peaks derived from the PS₄ structure (both of the PS₄ crystal structure and the PS₄ glass structure) is represented by 1. (ii) In Table 3, the area of the peaks derived from the structure represents the area of the peaks derived from each of the structures when the total area of the peaks derived from the PS4 glass structure is represented by 1.

### [Table 2]

**Table 2**

| No. | Composition of Solid Electrolyte | Total Area of Peaks Derived from PS₄ Structure is 1 | | | | | | Performance |
|---|---|---|---|---|---|---|---|---|
| | | PS₄ Glass | PS₄ Crystal | P₂S₇ Glass | P₂S₇ Crystal | P₂S₆ Glass | P₂S₆ Crystal | Ionic conductivity (× 10⁻³ S/cm) |
| Example 1 | Li₁₀P₃S₁₂ | 1 | | 0.151 | 0.091 | 0.252 | 0.067 | 1.93 |
| Example 2 | Li₁₀P₃S₁₂ | 1 | | 0.079 | 0.162 | 0.188 | 0.032 | 1.70 |
| Example 3 | Li₁₀P₃S₁₂ | 1 | | 0.079 | 0.123 | 0.110 | 0.017 | 1.47 |
| Comparative Example 1 | Li₉P₃S₁₂ | 1 | | 0.064 | 0.154 | 0.089 | 0.014 | 0.77 |
| Comparative Example 2 | Li₁₀P₃S₁₂ | 1 | | 0.112 | 0.139 | 0.075 | 0.027 | 0.47 |

### [Table 3]

**Table 3**

| No. | Composition of Solid Electrolyte | Total Area of Peaks Derived from PS₄ Glass Structure is 1 | | | | | | Performance |
|---|---|---|---|---|---|---|---|---|
| | | PS₄ Glass | PS₄ Crystal | P₂S₇ Glass | P₂S₇ Crystal | P₂S₆ Glass | P₂S₆ Crystal | Ionic conductivity (× 10⁻³ S/cm) |
| Example 1 | Li₁₀P₃S₁₂ | 1 | 0.400 | 0.212 | 0.127 | 0.353 | 0.093 | 1.93 |
| Example 2 | Li₁₀P₃S₁₂ | 1 | 0.368 | 0.108 | 0.221 | 0.257 | 0.044 | 1.70 |
| Example 3 | Li₁₀P₃S₁₂ | 1 | 0.483 | 0.117 | 0.183 | 0.163 | 0.026 | 1.47 |
| Comparative Example 1 | Li₉P₃S₁₂ | 1 | 1.824 | 0.180 | 0.434 | 0.250 | 0.040 | 0.77 |
| Comparative Example 2 | Li₁₀P₃S₁₂ | 1 | 0.375 | 0.155 | 0.191 | 0.103 | 0.037 | 0.47 |

As shown in Tables 2 and 3, in the sulfide-based inorganic solid electrolyte material (Examples 1 to 3) where the total area of the peaks derived from the P₂S₆ glass structure was 0.1 or more when the total area of peaks derived from a PS₄ structure was represented by 1 in the spectrum obtained by ³¹P-NMR measurement, the lithium ionic conductivity was high. On the other hand, in the sulfide-based inorganic solid electrolyte material (Comparative Examples 1 and 2) where the total area of the peaks derived from the P₂S₆ glass structure was less than 0.1, the lithium ionic conductivity was poor.

In addition, from a comparison between Examples 1 and 2 and Example 3, the tendency that the lithium ionic conductivity is further improved as the total area of the peaks derived from the P₂S₆ glass structure increases was read.

The present application claims priority based on Japanese Patent Application No. 2020-197943 filed on November 30, 2020, the entire content of which is incorporated herein by reference.

### REFERENCE SIGNS LIST

100: lithium ion battery
101: positive electrode active material layer
103: negative electrode active material layer
105: current collector
110: positive electrode
120: electrolyte layer
130: negative electrode

## Claims

1. A sulfide-based inorganic solid electrolyte material comprising:
Li, P, and S as constituent elements,
wherein in a spectrum obtained by ³¹P-NMR measurement, when a total area of peaks derived from a PS₄ structure is represented by 1, a total area of peaks derived from a P₂S₆ glass structure is 0.1 or more.

2. The sulfide-based inorganic solid electrolyte material according to claim 1,
wherein in the spectrum, when a total area of peaks derived from a PS₄ glass structure is represented by 1, a total area of peaks derived from a P₂S₆ glass structure is 0.15 or more.

3. The sulfide-based inorganic solid electrolyte material according to claim 1 or 2,
wherein in the spectrum, when a total area of peaks derived from a PS₄ glass structure is represented by 1, a total area of peaks derived from a PS₄ crystal structure is 0.3 to 1.

4. The sulfide-based inorganic solid electrolyte material according to any one of claims 1 to 3,
wherein a lithium ionic conductivity is 1.5 × 10⁻³ S/cm or higher.

5. The sulfide-based inorganic solid electrolyte material according to any one of claims 1 to 4,
wherein the sulfide-based inorganic solid electrolyte material is formed of particles having a median size of 0.1 to 10 um.

6. The sulfide-based inorganic solid electrolyte material according to any one of claims 1 to 5,
wherein a molar ratio Li/P of a content of Li to a content of P in the sulfide-based inorganic solid electrolyte material is 1.0 or higher and 5.0 or lower, and a molar ratio S/P of a content of S to the content of P in the sulfide-based inorganic solid electrolyte material is 2.0 or higher and 6.0 or lower.

7. The sulfide-based inorganic solid electrolyte material according to any one of claims 1 to 6,
wherein the sulfide-based inorganic solid electrolyte material is used for a lithium ion battery.

8. A solid electrolyte comprising:
the sulfide-based inorganic solid electrolyte material according to any one of claims 1 to 7.

9. A solid electrolyte membrane comprising:
the solid electrolyte according to claim 8 as a main component.

10. The solid electrolyte membrane according to claim 9,
wherein the solid electrolyte membrane is a compact obtained by compression-molding the particle-shaped solid electrolyte.

11. The solid electrolyte membrane according to claim 9 or 10,
wherein a content of a binder resin in the solid electrolyte membrane is less than 0.5 mass% with respect to 100 mass% as a total amount of the solid electrolyte membrane.

12. The solid electrolyte membrane according to any one of claims 9 to 11,
wherein a content of the sulfide-based inorganic solid electrolyte material in the solid electrolyte membrane is 50 mass% or more with respect to 100 mass% as a total amount of the solid electrolyte membrane.

13. A lithium ion battery comprising:
a positive electrode including a positive electrode active material layer;
an electrolyte layer; and
a negative electrode including a negative electrode active material layer,
wherein at least one of the positive electrode active material layer, the electrolyte layer, and the negative electrode active material layer includes the sulfide-based inorganic solid electrolyte material according to any one of claims 1 to 7.
